# EUROPÄISCHE PATENTSCHRIFT

(11) **EP 4 212 741 B1**
(45) Veröffentlichungstag und Bekanntmachung des Hinweises auf die Patenterteilung: **20.08.2025**
(21) Anmeldenummer: 22152087.7
(22) Anmeldetag: 18.01.2022
(51) Int. Cl.: F15B 13/08, F15B 19/00, G05B 13/02, B60C 23/00

(54) **VORRICHTUNG UND VERFAHREN ZUR STEUERUNG UND REGELUNG VON FLUIDSTRÖMEN**
DEVICE AND METHOD FOR CONTROLLING AND REGULATING FLUID STREAMS
DISPOSITIF ET PROCÉDÉ DE COMMANDE ET DE RÉGULATION DE FLUX DE FLUIDE

(43) Veröffentlichungstag der Anmeldung: 19.07.2023
(73) Patentinhaber: Asco Numatics GmbH, 75248 Ölbronn-Dürrn (DE)
(72) Erfinder: AMS,Felix, 75236 Kämpfelbach (DE)
(74) Vertreter: Witte, Weller & Partner Patentanwälte mbB

(56) Entgegenhaltungen:
- WO-A2-2021/115634
- WO-A2-2022/008926
- DE-A1- 102006 053 628
- US-A1- 2018 304 715
- US-A1- 2021 131 459

## Beschreibung

Die vorliegende Erfindung bezieht sich auf eine Vorrichtung zur Steuerung und Regelung von Fluidströmen, die eine Mehrzahl von Ventileinheiten umfasst, die an einer Basis angeordnet sind. Ferner bezieht sich die vorliegende Erfindung auf ein Verfahren zum Betreiben einer solchen Vorrichtung. Schließlich bezieht sich die vorliegende Erfindung auf die Verwendung einer solchen Vorrichtung. Eine erfindungsgemäße Vorrichtung kann auch als Mehrfach-Ventilsystemen bezeichnet werden.

Aus der US 2021/131459 A1 ist eine Magnetventilanordnung bekannt, die einen Ventilkörper aufweist, in dem ein magnetisch betätigbarer Schieber gleitend gelagert ist. Ferner ist ein Verteilerelement mit mehreren Strömungswegen zu den Anschlüssen der Magnetventilanordnung vorgesehen. Zwischen dem Ventilkörper und dem Verteilerelement ist ein Zwischenblock eingefügt, der eine Mehrzahl von Durchgangslöchern zur Verbindung von Anschlüssen des Verteilerelements mit den Anschlüssen des Ventilkörpers aufweist. Im Zwischenblock ist zumindest ein Sensor untergebracht, um den Druck und/oder den Durchfluss in mindestens einem der Durchgangslöcher zu erfassen.

Vorrichtungen zur Steuerung und/oder Regelung von Fluidströmen umfassen üblicherweise zumindest eine Ventileinheit mit zumindest einem Ventil. Es sind als sogenannte Ventilinseln bezeichnete Vorrichtungen bekannt, die mehrere Ventileinheiten umfassen. Derartige Vorrichtungen können modular gestaltet sein. Beispielsweise weist eine solche Vorrichtung eine Ventilbasis auf, die eine Mehrzahl von Plätzen zur Aufnahme von Ventileinheiten umfasst. Demgemäß kann die Vorrichtung (Ventilinsel) komplettiert werden, indem mehrere gewünschte Ventileinheiten in geeignete Plätze auf der Ventilbasis gesetzt werden. Auf diese Weise lassen sich Vorrichtungen für komplexe Anwendungen unter Verwendung standardisierter Komponenten realisieren.

In beispielhaften Ausgestaltungen bezieht sich die vorliegende Erfindung auf eine Mehrzahl von Ventileinheiten umfassende Vorrichtungen für pneumatische Steuerungen, bei denen also Druckluft als fluidisches Medium verwendet wird.

Aus der DE 10 2006 018 220 A1 sowie der WO 2017/076430 A1 sind derartige Ventilinseln bekannt. Aus der WO 2008/138371 A1 sowie der DE 10 2017 009 374 A1 sind Ventileinheiten in Form von Wegeventilen mit Vorsteuerung auf Basis zweier Pilotventile bekannt. Derartige Ventileinheiten eignen sich zur Verwendung in Ventilinseln mit einer Mehrzahl von Ventileinheiten für komplexe Steuerungsaufgaben.

Aus der EP 0 316 500 A1 ist eine Ventilanordnung bekannt, die einen zu steuernden Zylinder, eine als Wegeventil gestaltete Ventileinheit sowie eine Zwischenplatte umfasst, die zwischen einem Gehäuse des Zylinders und der Ventileinheit angeordnet ist. Die Zwischenplatte weist Kanäle zur Durchleitung eines Fluides zwischen dem Zylinder und der Ventileinheit auf. Es sind zwei Konfigurationen vorgesehen, so dass in Abhängigkeit von der Positionierung der Zwischenplatte verschiedene Funktionen realisierbar sind.

Aus der DE 11 2017 004 489 T5 ist eine als Reifendrucksensor gestaltete Sensoranordnung bekannt, die eine Mehrzahl von Sensoren umfasst, die zur Erfassung von Vibrationen, Temperatur und Druck gestaltet sind. Die Sensoren sind in ein gemeinsames Gehäuse integriert. Die Sensoranordnung ist kompakt und robust gestaltet. Es ist eine integrierte Energieversorgung in Form einer Batterie vorgesehen. Die Sensoren der Sensoranordnung sind auf einer gemeinsamen Leiterplatte innerhalb des Gehäuses angeordnet.

Aus der EP 3 825 788 A1 ist eine Ventilanordnung mit einer Optimierungseinheit bekannt, die auf Basis künstlicher neuronaler Netze arbeitet. Es wird vorgeschlagen, derartige Systeme zur Optimierung von Regelkreisen mit Ventilanordnungen zu verwenden, wobei spezifische Ansätze zur Reduzierung des Aufwands für das Training der Optimierungseinheit beschrieben werden, um die Regelgüte zu verbessern.

Beispielsweise in der Fertigungstechnik, Automatisierungstechnik, Intralogistik aber auch bei weiteren Anwendungen besteht ein Bedarf an komplexen fluidischen Systemen, die beispielsweise unter Nutzung sogenannter Ventilinseln mit einer Mehrzahl oder Vielzahl von Ventileinheiten gebildet werden. Naturgemäß steigt mit der Anzahl an Komponenten die Ausfallwahrscheinlichkeit eines Gesamtsystems. Dies führt regelmäßig zu einem erhöhten Aufwand für Wartung und/oder Reparatur.

Es wäre daher vorteilhaft, die Komponenten komplexer Ventilanordnungen bis hin zur Ebene einzelner Ventileinheiten zu überwachen, um im Idealfall etwaigen Ausfällen zuvorzukommen. Unter dem Stichwort prädiktive Instandhaltung bzw. vorausschauende Wartung werden verschiedene Ansätze verfolgt, um einerseits den Wartungsaufwand und andererseits ein mögliches Ausfallrisiko zu minimieren. Derartige Ansätze erfordern jedoch regelmäßig einen gewissen Aufwand für die erforderliche Sensorik, um im Betrieb genügend Daten ermitteln zu können, die einer Auswertung zu Zwecken der vorausschauenden Wartung zugeführt werden können.

Gerade bei Ventilinseln mit einer Vielzahl von Ventileinheiten, jedoch auch bei anderen Ventilanordnungen, besteht jedoch häufig der Wunsch nach möglichst geringer Baugröße, so dass eine Vielzahl von Ventileinheiten und anderen Komponenten mit möglichst geringem Platzbedarf miteinander kombiniert werden können.

Vor diesem Hintergrund liegt der Erfindung die Aufgabe zugrunde, eine Vorrichtung zur Steuerung und Regelung von Fluidströmen mit einer Mehrzahl von Ventileinheiten und einer diesen zugeordneten Steuereinrichtung anzugeben, deren Gestaltung zumindest einige der obigen Aspekte berücksichtigt. Insbesondere soll die Vorrichtung mit möglichst nur geringem Zusatzaufwand eine Überwachung des Betriebs der Ventileinheiten erlauben, wobei erfasste Daten möglichst zu Zwecken der prädiktiven Instandhaltung auswertbar sind. Die Vorrichtung soll mit möglichst nur geringen konstruktiven Eingriffen in bestehende Baukästen und Komponenten für Ventilinseln realisierbar sein. Die Vorrichtung soll bedarfsweise eine Erweiterung bestehender Ventilinseln mit nur geringem Aufwand ermöglichen. Ferner soll im Rahmen der vorliegenden Erfindung ein Verfahren zum Betrieb einer solchen Vorrichtung angegeben werden.

Gemäß einem ersten Aspekt bezieht sich die vorliegende Erfindung auf eine Vorrichtung zur Steuerung und Regelung von Fluidströmen, die Folgendes aufweist:
- zumindest zwei elektrisch betätigte Ventileinheiten,
- eine Ventilbasis, die zumindest zwei Ventileinheiten trägt,
- eine Steuereinrichtung zur Steuerung und Überwachung der zumindest zwei Ventileinheiten,
- eine erste multifunktionale Sensoreinheit, die einer ersten der zumindest zwei elektrisch betätigten Ventileinheiten zugeordnet ist, und
- eine zweite multifunktionale Sensoreinheit, die einer zweiten der zumindest zwei elektrisch betätigten Ventileinheiten zugeordnet ist,
   wobei die erste Sensoreinheit und die zweite Sensoreinheit jeweils einen Körperschallsensor zur Erfassung eines Körperschallsignals aufweisen,
   wobei die erste Sensoreinheit und die zweite Sensoreinheit jeweils zumindest einen weiteren Sensor zur Erfassung einer weiteren Messgröße aufweisen, wobei die Steuereinrichtung dazu ausgebildet ist, durch die Sensoreinheiten bereitgestellte Signale auf Basis einer Korrelation mit einer elektrischen Ventilerregung auszuwerten, und
   wobei die Steuereinrichtung dazu ausgebildet ist, die Auswertung auf Basis der Signale begrenzter Zeitfenster durchzuführen, umfassend ein erstes Zeitfenster, das eine erste Flanke eines Erregungssignals abdeckt, und ein zweites Zeitfenster, das eine zweite Flanke des Erregungssignals abdeckt, die gegenläufig zur ersten Flanke ist.

Gemäß einem weiteren Aspekt bezieht sich die vorliegende Erfindung auf ein Verfahren zum Betreiben einer erfindungsgemäßen Vorrichtung zur Steuerung und Regelung von Fluidströmen, wobei das Verfahren die folgenden Schritte aufweist:
- Betreiben der Steuereinrichtung zur Überwachung von durch die Sensoreinheiten bereitgestellten Signalen auf Basis einer Korrelation erfasster Messgrößen mit einer elektrischen Ventilerregung, insbesondere einer Ventilerregung von Pilotventilen der Ventileinheiten, umfassend:
   - Bereitstellung von Signalen durch zumindest die erste Sensoreinheit oder die zweite Sensoreinheit nur in begrenzten Zeitfenstern, umfassend ein erstes Übertragungs-Zeitfenster, das eine erste Flanke eines Erregungssignals abdeckt, und ein zweites Übertragungs-Zeitfenster, das eine zweite Flanke des Erregungssignals abdeckt, die gegenläufig zur ersten Flanke ist, und
   - Auswertung der bereitgestellten Signale, die in den begrenzten Zeitfenstern durch zumindest die erste Sensoreinheit oder die zweite Sensoreinheit bereitgestellt werden.

Multifunktionssensoren im Sinne der vorliegenden Erfindung sind solche Sensoren, die neben einer Basisfunktion zumindest noch eine weitere Messgröße (bzw. physikalische Größe) erfassen können. Es werden also zwei oder mehr verschiedene Messgrößen erfasst. Hierbei handelt sich beispielsweise um Beschleunigung (Schwingungen), Druck, Differenzdruck, Durchfluss, Temperatur und dergleichen. In einer beispielhaften Ausgestaltung sind Sensoreinheiten autark oder zumindest teilautark gestaltet, insbesondere hinsichtlich einer Energieversorgung.

Der Körperschallsensor kann grundsätzlich auch als akustischer Sensor, Schwingungssensor, Vibrationssensor, Beschleunigungssensor oder dergleichen bezeichnet werden. Üblicherweise ist ein solcher Sensor als Beschleunigungssensor zur Erfassung von Beschleunigungen in einer oder mehreren Raumrichtungen ausgestaltet. Akustisches Sensoren erlauben eine Überwachung der Ventileinheiten im Zeitablauf, also nicht nur die Erfassung bestimmter Ereignisse oder Schaltzustände. Auf diese Weise können Daten über die Lebensdauer der Ventileinheit erfasst werden. Gleichwohl eignet sich auch ein akustischer Sensor zur Erfassung spezifischer Ereignisse, beispielsweise das Öffnen und Schließen eines Ventils bzw. das Verfahren eines Schiebers eines Wegeventils.

Mit anderen Worten können mit akustischen Sensoren sowohl spezifische Ereignisse als auch Daten betreffend das Betriebsverhalten der Ventileinheit während der Lebensdauer erfasst werden. Auf diese Weise kann eine Zustandsüberwachung bereitgestellt werden, gleichwohl ist auch eine Ausfall-Frühdiagnose möglich. Akustische Sensoren eignen sich zur Gewinnung von Daten zu Zwecken der prädiktiven Instandhaltung bzw. der vorausschauenden Wartung.

Neben dem akustischen Sensor ist zumindest ein weiterer Sensor zur Erfassung einer weiteren Messgröße vorgesehen und die verschiedenen Sensordaten der Auswertung lassen sich zuführen und bedarfsweise korrelieren. Eine Korrelation der Sensordaten kann ferner mit Signalen und Daten betreffend die Erregung der Fluideinheiten erfolgen. Dies kann sich auch auf die Erregung von Pilotventilen beziehen, etwa bei vorgesteuerten Ventilen. Auf diese Weise kann ein Zusammenhang zwischen der ursprünglichen Erregung und der resultierenden Betätigung des Hauptventils hergestellt werden.

Die Korrelation kann zwischen erfassten Sensordaten sowie der Ventilerregung erfolgen, also beispielsweise einem Schaltzustand der elektrischen Ansteuerung der Pilotventile. Die Korrelation kann auch zwischen verschiedenen Sensordaten erfolgen. Die Korrelation kann hinsichtlich bestimmter Eigenschaften der Signale/Daten erfolgen, beispielsweise hinsichtlich Frequenzspektrum, Amplitude, Phasenverschiebung, Zeitverzögerung und Zeitfenstern. Auf dieser Basis lassen sich Aussagen hinsichtlich Verschleiß und gegebenenfalls hinsichtlich möglicher Fehlfunktionen beim Schalten herleiten.

In beispielhaften Ausgestaltungen sind die Ventileinheiten als pneumatische Ventileinheiten gestaltet. Die Vorrichtung kann als Ventilinsel oder pneumatische Ventilinsel bezeichnet werden.

Die Ventilbasis kann als sogenannte Basisplatte oder Grundplatte gestaltet sein. Hierbei handelt es sich beispielsweise um eine modulare Platte mit mehreren Plätzen zur Aufnahme von Ventileinheiten. Ferner ist die Basisplatte beispielhaft dazu ausgestaltet, eine Steuereinrichtung und/oder Schnittstellen zur Verbindung mit Steuereinrichtungen zu tragen und/oder zu beherbergen. Auf diese Weise kann die Mehrzahl oder Vielzahl von Ventileinheiten zentral angesteuert werden. Dies bezieht sich ferner auf die Versorgung mit dem Fluid, also beispielsweise die Druckluftversorgung.

Gemäß einem weiteren Aspekt bezieht sich die vorliegende Erfindung auf eine Verwendung einer Sensoranordnung für Reifendruckkontrollsysteme als zumindest erste multifunktionale Sensoreinheit oder zweite multifunktionale Sensoreinheit einer erfindungsgemäßen Vorrichtung.

Sensoranordnungen für aktive Reifendruckkontrollsysteme (RDKS) bzw. Tyre pressure monitoring systems (TPMS) umfassen regelmäßig mehrere miniaturisierte Sensoren, die auf einer gemeinsamen Platine angeordnet und gegebenenfalls in eine gemeinsame Leiterplatte integriert sind. Derlei Sensoranordnungen sind üblicherweise hermetisch gekapselt. Ferner sind die Sensoren leichtgewichtig gestaltet.

Ein Reifendrucksensor mit mehreren Sensoreinheiten ist beispielsweise aus der DE 11 2017 004 489 T5. Der dortige Sensor umfasst einen Beschleunigungssensor und weitere Sensoren, beispielsweise Temperatursensoren, Drucksensoren und Ähnliches für andere physikalische Größen. Reifendrucksensoren werden in großen Stückzahlen hergestellt. Reifendrucksensoren weisen regelmäßig integrierte Einheiten zur Energieversorgung sowie zur Kommunikation mit der Umgebung auf, insbesondere zur drahtlosen Kommunikation. Ferner ist die Baugruppe aufgrund des Einbaus am/im Rad häufig hermetisch gekapselt und in ein gemeinsames Gehäuse integriert. Reifendrucksensoren sind hochverfügbar und kostengünstig herstellbar.

Ein Aspekt der vorliegenden Erfindung geht dahin, dass sich derartige Sensoranordnungen auch gut zur sensorischen Erweiterung/Ergänzung von Ventilinseln und vergleichbaren Vorrichtungen mit einer Mehrzahl von Ventileinheiten anbieten. Auf diese Weise können die Vorrichtungen ohne großen Mehraufwand zur Erfassung einer Mehrzahl oder Vielzahl von Messgrößen bzw. Sensorkanäle ertüchtigt werden.

Gemäß einer beispielhaften Ausgestaltung der Vorrichtung oder des Verfahrens ist der zumindest eine weitere Sensor der ersten Sensoreinheit und der zweiten Sensoreinheit ein Drucksensor. Gemäß einer beispielhaften Ausgestaltung der Vorrichtung oder des Verfahrens ist der zumindest eine weitere Sensor der ersten und zweiten Sensoreinheit ein Temperatursensor. Auch eine Kombination aus Drucksensor und Temperatursensor ist vorstellbar. Ein Drucksensor kann als Absolutdrucksensor oder Differenzdrucksensor gestaltet sein.

Es versteht sich, dass auch drei oder mehr Sensortypen innerhalb einer Sensoreinheit vorgesehen sein können, zumindest in beispielhaften Ausgestaltungen.

Gemäß einer beispielhaften Ausgestaltung der Vorrichtung oder des Verfahrens umfassen die zumindest zwei Ventileinheiten jeweils vorgesteuerte Ventile, insbesondere Wegeventile mit Piezo-Vorsteuerung.

Ein vorgesteuertes Ventil ist regelmäßig mit zumindest einem sogenannten Pilotventil gekoppelt. Ein Pilotventil kann mit relativ geringem Kraftaufwand/Energieaufwand gesteuert werden. Das Pilotventil kann das gleiche Medium wie das Hauptventil, aber auch ein anderes Medium nutzen. Das Pilotventil steuert das eigentliche Hauptventil, also beispielsweise einen Schieber eines Wegeventils. Das Pilotventil dient zur Kraftverstärkung bzw. zur Reduzierung der erforderlichen Betätigungskräfte. Das Pilotventil ist beispielsweise als Piezo-Pilotventil gestaltet. Es sind Ausführungsbeispiele mit zwei Pilotventilen vorstellbar, die einer Ventileinheit, beispielsweise einem als Wegeventil gestalteten Hauptventil, zugeordnet sind. Ein erstes der beiden Pilotventile dient zur Bewegung des Schiebers in eine erste Richtung. Das zweite Pilotventil dient zur Bewegung des Ventilschiebers oder Ventilgliedes in eine entgegengesetzte, zweite Richtung.

Das Hauptventil ist beispielsweise als Wegeventil gestaltet. Ein Wegeventil umfasst im Sinne der vorliegenden Erfindung zumindest drei Anschlüsse und mindestens zwei Schaltstellungen. Beispielsweise umfasst ein Wegeventil mindestens vier Anschlüsse und mindestens zwei Schaltstellungen (4/2-Wegeventil). Beispielsweise umfasst ein Wegeventil mindestens fünf Anschlüsse und mindestens drei Schaltstellungen (5/3-Wegeventil).

Erfindungsgemäß ist die Steuereinrichtung dazu ausgebildet, durch die Sensoreinheiten bereitgestellte Signale auf Basis einer Korrelation mit einer elektrischen Ventilerregung auszuwerten. Da die Sensoreinheit einer Ventileinheit dazu ausgebildet ist, eine Mehrzahl physikalischer Größen zu erfassen und entsprechende Sensordaten zu ermitteln, kann eine Mehrzahl oder Vielzahl von Daten der Korrelation zugrunde gelegt werden. Die Ventilerregung wird beispielsweise durch ein binäres Signal wiedergegeben, das durch die Zustände 0 und I den unbestromten und den bestromten Zustand eines Pilotventils repräsentiert.

Die Erregersignale (Erregung des Pilotventils) können in Korrelation zur Funktion der Ventileinheit gebracht werden, wobei die Funktion durch Sensordaten repräsentiert wird, die durch die Sensoreinheit bereitgestellt werden.

Die Steuereinrichtung ist dazu ausgebildet, die Auswertung auf Basis der Signale begrenzter Zeitfenster durchzuführen, umfassend ein erstes Zeitfenster, das eine erste Flanke eines Erregungssignals abdeckt, und ein zweites Zeitfenster, das eine zweite Flanke des Erregungssignals abdeckt, die gegenläufig zur ersten Flanke ist. Es versteht sich, dass das erste Zeitfenster und das zweite Zeitfenster periodisch oder aperiodisch wiederholbar sind.

Das Erregungssignal ist beispielsweise ein binäres oder näherungsweise binäres Erregungssignal für zumindest ein Pilotventil. Die beiden Flanken des Erregungssignals können die Zustände Aktivierung und Deaktivierung repräsentieren. Ein solches Signal weist steile (idealerweise senkrechte/vertikale) Flanken und nahezu vollständig ebene (idealerweise waagerechte/horizontale) Abschnitte zwischen den Flanken auf. Insbesondere im Umfeld der Flanken - zeitlich betrachtet - ist mit deutlichen Änderungen der für die Korrelation herangezogenen Sensordaten zu rechnen.

Daher ist es vorstellbar, sich für die Korrelation auf wesentliche Unterabschnitte (Zeitabschnitte) des Signals zu konzentrieren. Dies erhöht die Aussagekraft der Datenkorrelation.

Gemäß einer beispielhaften Ausgestaltung der Vorrichtung oder des Verfahrens sind zumindest die erste Sensoreinheit oder die zweite Sensoreinheit dazu ausgebildet oder betreibbar, Signale nur in einem ersten Übertragungs-Zeitfenster und in einem zweiten Übertragungs-Zeitfenster zu übermitteln. Mit anderen Worten können die Sensoreinheiten derart betrieben werden, dass Signale nicht permanent übermittelt werden, sondern dann, wenn das Erregungssignal signifikante Änderungen erfährt. Die Übertragungs-Zeitfenster können beispielhaft die erste Flanke und die zweite Flanke des Erregungssignals und hieraus resultierende Änderungen des Sensorsignals oder der Sensorsignale umfassen. In den übrigen Zeitabschnitten muss kein Signal übermittelt werden. Auf diese Weise kann sich die Korrelation auf interessante Zeitabschnitte mit relevanten Änderungen konzentrieren. Ferner lässt sich der Energieverbrauch der Sensoreinheit sowie der zu Korrelationszwecken genutzten Steuereinrichtung reduzieren.

Gemäß einer beispielhaften Ausgestaltung der Vorrichtung oder des Verfahrens ist die Steuereinrichtung dazu ausgebildet, zu Auswertungszwecken auf Basis der Sensorsignale zumindest eine Größe zu ermitteln, die aus der Gruppe ausgewählt ist, die aus Folgendem besteht: Frequenzspektrum, Amplitude, Phase, Zeitverzögerung und Kombinationen daraus. Ähnliche Größen können auch auf Basis des Erregungssignals ermittelt werden.

Gemäß einer beispielhaften Ausgestaltung der Vorrichtung oder des Verfahrens ist die Steuereinrichtung dazu ausgebildet ist, auf Basis der durch die Sensoreinheiten bereitgestellten Signale einen Schaltzustand der Ventileinheiten zu ermitteln. Auf diese Weise können die Schaltzyklen der Ventileinheiten erfasst und überwacht werden. Ferner kann die Zustandsüberwachung auch zur Steuerung der Ventileinheit, der eine Mehrzahl von Ventileinheiten umfassenden Vorrichtung sowie eines Systems, in dem die Vorrichtung zur Anwendung kommt, genutzt werden.

Die Zustandsüberwachung erfolgt in einer beispielhaften Ausgestaltung direkt beim Hauptventil (beispielsweise Wegeventil) der Ventileinheit. Das Erregungssignal selbst wirkt beispielsweise auf das Pilotventil. Daher kann rein auf Basis des Erregungssignals der Zustand des Hauptventils nur indirekt ermittelt werden. Die direkte Zustandsüberwachung kann eine genauere Steuerung und Regelung der Ventileinheit ermöglichen.

Gemäß einer beispielhaften Ausgestaltung der Vorrichtung oder des Verfahrens ist die Steuereinrichtung dazu ausgebildet, auf Basis der durch die Sensoreinheiten bereitgestellten Signale zumindest einen Parameter zu ermitteln, der zu Diagnosezwecken nutzbar ist, insbesondere zu Zwecken der Ausfall-Frühdiagnose und/oder zu Zwecken der prädiktiven Instandhaltung. Die permanente Zustandsüberwachung erlaubt einerseits die Erfassung des aktuellen Schaltzustands des Ventils. Ferner können im Zeitablauf Daten erfasst und hergeleitet werden, die Rückschlüsse auf den Verschleißzustand und eventuelle Defekte zulassen. Idealerweise lässt sich auf Basis der zusätzlich bereitgestellten Sensordaten eine Früherkennung etwaiger Funktionsstörungen implementieren, unter Nutzung der mit dem Erregungssignal korrelierten Sensordaten.

Gemäß einer beispielhaften Ausgestaltung der Vorrichtung oder des Verfahrens ist die Steuereinrichtung dazu ausgebildet, erfasste Sensordaten mittels künstlicher Intelligenz auszuwerten, beispielsweise in Form künstlicher neuronaler Netze. Ein solches künstliches neuronales Netz kann beispielsweise dazu ausgebildet sein, bestimmte Signalmuster oder Datenmuster zu erkennen. Dies kann die von den Sensoreinheiten bereitgestellten Daten aber auch Daten betreffen, die als Ergebnis einer Korrelation gewonnen werden. Ein Ziel des neuronalen Netzes ist beispielsweise, bestimmte Muster zu erkennen, die auf einen baldigen Ausfall der Ventileinheit oder der gesamten Vorrichtung hindeuten. Ferner kann ein Ziel des neuronalen Netzes darin bestehen, bestimmte Betriebszustände anhand spezifischer Muster zu erkennen. Die Mustererkennung zu Zwecken der Überwachung und Auswertung kann mit Maßnahmen zum maschinellen Lernen zum Trainieren des neuronalen Netzes kombiniert werden.

Gemäß einer beispielhaften Ausgestaltung der Vorrichtung oder des Verfahrens ist die Steuereinrichtung dazu ausgebildet, eine maschinengestützte Selbstlernprozedur durchzuführen, um einen Referenzzustand zu ermitteln. Gemäß einer weiteren beispielhaften Ausgestaltung der Vorrichtung oder des Verfahrens umfasst die Selbstlernprozedur ein unüberwachtes maschinellen Lernen auf Basis neuronaler Netze. Die Selbstlernprozedur kann beispielsweise dazu genutzt werden, um bei einer neuen Ventileinheit einen Referenzzustand (Gutzustand) zu ermitteln, der als Referenz für die Überwachung des Betriebsverhaltens und eines etwaigen Verschleißes dient.

Beispielhaft nutzt die Selbstlernprozedur einen Algorithmus, der das neuronale Netz trainiert, das in einem definierten Zustand zur Mustererkennung und Klassifikation nutzbar ist. Auf dem Gebiet des maschinellen Lernens gibt es Ansätze zum überwachten Lernen sowie zum unüberwachten Lernen.

Das überwachte Lernen beruht auf Trainingsdaten, die einem genutzten Algorithmus zur Verfügung gestellt werden. Diese Trainingsdaten können beispielsweise Referenzzustände aber auch unerwünschte Zustände (Verschleiß, Defekt und Ähnliches) umfassen. Der Algorithmus kann dann trainiert werden, um anhand der bereitgestellten Sensordaten bestimmte Muster zu erkennen, die eine Klassifizierung erlauben.

Das sogenannte unüberwachte Lernen verzichtet auf eigens bereitgestellte Trainingsdaten. Gleichwohl erfolgt das Lernen auf Basis einer Vielzahl von Informationen, die bereitgestellt werden, um das künstliche neuronale Netz zu trainieren. Das künstliche neuronale Netz kann als sogenannte selbstorganisierende Karte (SOM - self organizing map) gestaltet sein. Eine selbstorganisierende Karte besteht beispielsweise aus einer Schicht künstlicher Neuronen, deren synaptische Kopplungen (Gewichtsfunktion) durch eine unüberwachte Lernregel adaptiert werden. Auf diese Weise können mehrdimensionale Informationen (beispielsweise von den verschiedenen Sensoren bereitgestellte Daten sowie das Erregungssignal) in vereinfachte Strukturen übergeführt werden, wobei bestimmte Beziehungen (Nachbarschaft) zwischen den Eingangsdaten erhalten werden. Die multidimensionalen Eingangsdaten werden kartiert, auf dieser Basis können Muster, Ähnlichkeiten, Gruppen (Cluster) und dergleichen erkannt werden.

Gemäß einer beispielhaften Ausgestaltung der Vorrichtung oder des Verfahrens ist zumindest die erste Sensoreinheit oder die zweite Sensoreinheit als baulich integrierte Sensoreinheit gestaltet. Dies umfasst beispielsweise ein einzelnes Gehäuse, das Komponenten der jeweiligen Sensoreinheit beherbergt. Die Sensoreinheiten können gekapselt sein. Ein Datenaustausch kann über einheitliche Schnittstellen erfolgen, dies kann auch einen drahtlosen Datenaustausch umfassen. Ferner kann eine Sensoreinheit eine gemeinsame Energieversorgung für die verbauten Komponenten aufweisen, beispielsweise in Form einer integrierten Batterie oder eines sonstigen Energiespeichers.

Gemäß einer beispielhaften Ausgestaltung der Vorrichtung oder des Verfahrens ist die Vorrichtung als modulare Ventilinsel gestaltet, wobei die Ventilbasis eine Mehrzahl von Ventilplätzen aufweist, die zur Aufnahme einer Ventileinheit ausgebildet sind, und wobei zumindest zwei der Ventilplätze Ventileinheiten tragen, denen gleichartige Sensoreinheiten zugeordnet sind. Auf diese Weise können einheitliche Sensoreinheiten in hoher Stückzahl verbaut werden. Dies erlaubt die Verwendung hochverfügbarer, kostengünstiger Sensoreinheiten.

Gemäß einer beispielhaften Ausgestaltung der Vorrichtung oder des Verfahrens sind zumindest die erste Ventileinheit oder die zweite Ventileinheit mit einer Zusatzplatte gekoppelt, die die zugeordnete erste Sensoreinheit oder zweite Sensoreinheit trägt. Gemäß einer weiteren beispielhaften Ausgestaltung der Vorrichtung oder des Verfahrens ist die Zusatzplatte zwischen der Ventilbasis und der Ventileinheit angeordnet, wobei die Zusatzplatte eine fluidische Verbindung zwischen der Ventilbasis und der Ventileinheit bereitstellt. Eine solchermaßen gestaltete Zusatzplatte kann auch als Zwischenplatte oder Sandwichplatte bezeichnet werden. Es versteht sich, dass die Zusatzplatte auch anderweitig an die Ventileinheit angeflanscht oder mit dieser gekoppelt sein kann.

Die Integration der Sensoreinheiten in eine Zusatzplatte vereinfacht die Ertüchtigung existierender Vorrichtungen mit multifunktionalen Sensoreinheiten. Wenn die Sensoreinheiten in einem Zusatzplatte oder Zwischenplatte integriert sind, bedarf es keiner aufwändigen baulichen Veränderungen bei der Ventilbasis und/oder den genutzten Ventileinheiten.

Gemäß einer alternativen Ausgestaltung der Vorrichtung oder des Verfahrens ist die Sensoreinheit direkt bei der Ventileinheit vorgesehen oder in diese integriert. Gemäß einer weiteren alternativen Ausgestaltung der Vorrichtung oder des Verfahrens ist die Sensoreinheit direkt bei der Ventilbasis vorgesehen oder in diese integriert.

Gemäß einer beispielhaften Ausgestaltung der Vorrichtung oder des Verfahrens ist zumindest die erste Sensoreinheit oder die zweite Sensoreinheit auf Basis einer Sensoranordnung für Reifendruckkontrollsysteme gebildet, wobei die Sensoranordnung einen integrierten Schaltkreis aufweist, der mehrere Sensortypen umfasst. Auf diese Weise kann eine günstige und leistungsfähige Sensoranordnung bereitgestellt werden, die sich zur Verwendung bei fluidischen Systemen, insbesondere zur Verwendung bei pneumatischen Ventileinheiten, eignet. Sensoranordnungen für Reifendruckkontrollsysteme sind ferner auch hinreichend robust und für den Einsatz im industriellen Umfeld geeignet.

Eine Sensoranordnung für Reifendruckkontrollsysteme ist üblicherweise hinreichend autark gestaltet und beispielsweise mit einer integrierten Energieversorgung versehen. Die Sensoranordnung umfasst beispielsweise zwei oder mehr Sensoren zur Erfassung physikalischer Größen wie Druck, Temperatur, Beschleunigung, Batteriespannung und dergleichen. Die Sensoranordnung umfasst regelmäßig eine Mehrzahl von Sensoren, die baulich in ein gemeinsames Gehäuse/eine gemeinsame Kapselung integriert sind.

Die Verwendung multifunktionaler Sensoreinheiten zur Überwachung einer Mehrzahl von Ventileinheiten bei Ventilinseln und dergleichen erhöht die Verfügbarkeit der Gesamtanlage, die eine oder mehrere solcher Ventilinseln verwendet. Ferner kann sich der Wartungsaufwand reduzieren. Die Leistungsfähigkeit kann sich erhöhen, eine präzise Steuerung und Regelung des Fluides kann ermöglicht werden.

Das multifunktionale Sensorkonzept kann den Aufbau von Regelungssystemen mit Echtzeitverhalten oder Nahezu-Echtzeitverhalten und außerdem komplexe Mehrgrößenregelungen ermöglichen, die eine Vielzahl physikalischer Größen berücksichtigen. Die Erfassung und Bereitstellung einer Vielzahl von Messgrößen erlaubt die Anwendung erweiterter Regelungsansätze, umfassend etwa nichtlineare Matrixregelung, neuronale Netzwerke und/oder die Nutzung künstlicher Intelligenz, bei der Steuerung und Regelung der Systeme.

Es versteht sich, dass die vorstehend genannten und die nachstehend noch zu erläuternden Merkmale der Erfindung nicht nur in der jeweils angegebenen Kombination, sondern auch in anderen Kombinationen verwendbar sind, ohne den durch die Ansprüche definierten Rahmen der vorliegenden Erfindung zu verlassen.

Weitere Merkmale und Vorteile der vorliegenden Erfindung ergeben sich aus der nachfolgenden Beschreibung mehrerer bevorzugter Ausführungsbeispiele unter Bezugnahme auf die Zeichnungen. Es zeigen:
- Fig. 1:: eine schematisch stark vereinfachte Draufsicht auf eine als Ventilinsel gestaltete Vorrichtung;
- Fig. 2:: eine Seitenansicht der Vorrichtung gemäß Fig. 1 in einer ersten Konfiguration;
- Fig. 3:: eine Seitenansicht der Vorrichtung gemäß Fig. 1 in einer zweiten Konfiguration;
- Fig. 4:: eine Seitenansicht der Vorrichtung gemäß Fig. 1 in einer dritten Konfiguration;
- Fig. 5:: eine stark vereinfachte schematische Schnittansicht einer Zusatzplatte der dritten Konfiguration gemäß Fig. 4 entlang der Linie V-V in Fig. 4;
- Fig. 6:: ein schematisches, stark vereinfachtes Blockdiagramm zur Veranschaulichung funktionaler Aspekte bei einer Ausgestaltung einer erfindungsgemäßen
- Fig. 7:: ein schematisches, stark vereinfachtes Blockdiagramm zur Veranschaulichung von Datenströmen und Datenverarbeitung bei einer Ausgestaltung einer erfindungsgemäßen Vorrichtung;
- Fig. 8:: eine Abfolge von aufeinander aufbauenden Diagrammen zur Veranschaulichung beispielhafter Signalverläufe beim Betrieb und der Überwachung einer erfindungsgemäßen Ventileinheit; und
- Fig. 9:: ein schematisch stark vereinfachtes Blockdiagramm zur Veranschaulichung einer Ausführungsform eines Verfahrens zum Betreiben einer Vorrichtung zur Steuerung und Regelung von Fluidströmen.

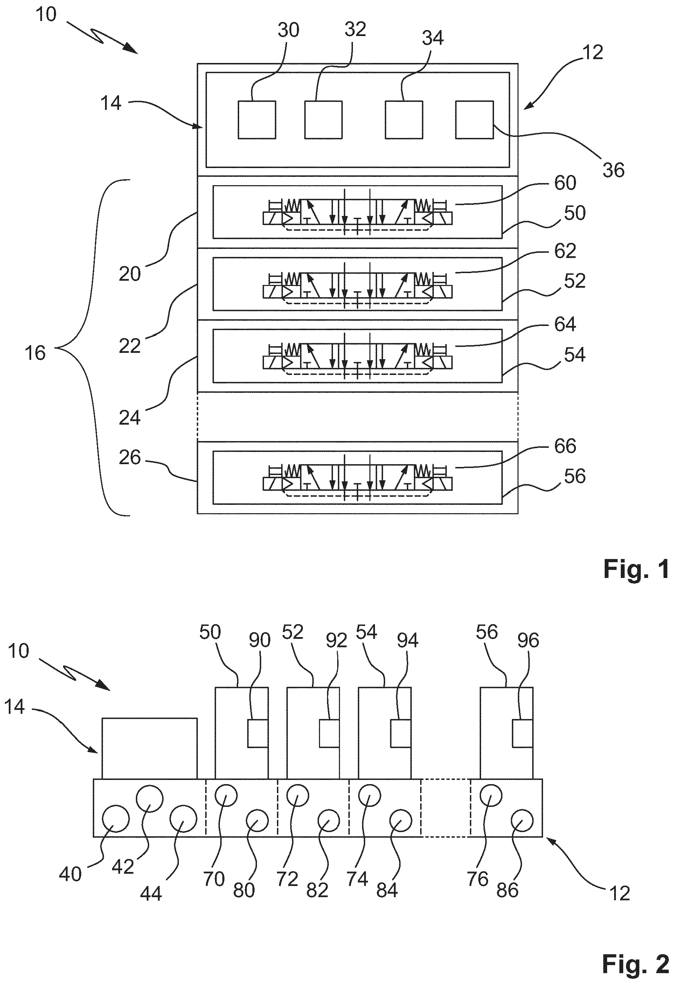

Fig. 1 zeigt anhand einer schematischen Ansicht eine insgesamt mit 10 bezeichnete Vorrichtung zur Steuerung und Regelung von Fluidströmen. Die Vorrichtung 10 kann auch als sogenannte Ventilinsel bezeichnet werden, zumindest in beispielhaften Ausgestaltungen. Die Vorrichtung 10 ist modular gestaltet. Im Ausführungsbeispiel dient die Vorrichtung 10 zur geregelten Bereitstellung gasförmiger Fluide, insbesondere zur Bereitstellung von Druckluft. Dies ist nicht einschränkend zu verstehen.

Ergänzend wird auf die Figuren 2-5 verwiesen, die weitere Ansichten verschiedener Konfigurationen der Vorrichtung 10 gemäß Fig. 1 veranschaulichen. In den Ausführungsbeispielen gemäß den Figuren 1-5 ist die Vorrichtung 10 modular gestaltet.

Die Vorrichtung 10 umfasst eine Ventilbasis 12, die auch als Grundplatte bezeichnet werden kann. Die Ventilbasis 12 trägt eine Steuereinrichtung 14. Die Ventilbasis 12 dient ferner zur Aufnahme einer Ventilgruppe 16, die zumindest teilweise durch die Steuereinrichtung 14 gesteuert und/oder geregelt wird. Im Ausführungsbeispiel gemäß Fig. 1 stellte die Ventilbasis 12 eine Mehrzahl von Plätzen 20, 22, 24, 26 zur Aufnahme von Ventileinheiten bereit.

Fig. 1 zeigt vier Plätze 20, 22, 24, 26 zur Aufnahme jeweils einer Ventileinheit. Die teilweise gestrichelte Darstellung der Ventilbasis 12 in Fig. 1 und weiteren der hierin gezeigten Figuren deutet an, dass weitere Plätze zur Aufnahme von Ventileinheiten vorgesehen sein können. Die Vorrichtung 10 umfasst zumindest zwei Plätze 20, 22, 24, 26 zur Aufnahme zumindest zweier Ventileinheiten.

Im Ausführungsbeispiel gemäß Fig. 1 umfasst die Steuereinrichtung 14 eine Fluidversorgungschnittstelle 30, eine (lokale) Steuereinheit 32, eine Schnittstelle zum Datenaustausch 34 sowie eine Energieversorgungsschnittstelle 36. Die Schnittstelle 34 ist beispielsweise als Bus-Interface gestaltet. Über die Schnittstelle 34 können Daten mit übergeordneten Steuervorrichtungen sowie mit untergeordneten Einheiten (Ventileinheiten, Sensoreinheiten, usw.) ausgetauscht werden. Gestaltungen mit ausschließlich lokaler Steuerung sind gleichwohl auch denkbar. In beispielhaften Ausgestaltungen übernimmt die (lokale) Steuereinheit 32 zumindest einen Teil der Steuer- und Regelaufgaben. Die Energieversorgungsschnittstelle 36 dient regelmäßig zur Versorgung mit elektrischer Energie. Alternativ oder zusätzlich kann auch ein Energiespeicher vorgesehen sein.

Die Steuereinrichtung 14 ist dazu ausgebildet, eine Mehrzahl von Ventileinheiten anzusteuern. Dies umfasst beispielsweise eine elektrische Erregung der Ventileinheiten. Dies kann eine elektrische Ansteuerung von Pilotventilen zur Steuerung von Hauptventilen der Ventileinheiten umfassen. Auch eine direkte elektrische Ansteuerung der Hauptventile ist gleichwohl vorstellbar.

Fig. 2 veranschaulicht, dass die Fluidversorgungschnittstelle 30 der Steuereinrichtung 14 verschiedene Anschlüsse zur Fluidversorgung aufweist. Dies umfasst beispielsweise einen Medienanschluss 40 für Zuluft sowie einen Medienanschluss 42 für Abluft. In einer beispielhaften Ausgestaltung ist ferner ein Medienanschluss 44 für Erregungs-Zuluft oder Pilot-Zuluft vorgesehen. Die Anschlüsse 40, 42 und bedarfsweise der Anschluss 44 dienen im Ausführungsbeispiel zur Versorgung mit einem gasförmigen Fluid. Die Anschlüsse 40, 42 und bedarfsweise der Anschluss 44 stellen eine zentrale Fluidversorgung und Fluidabfuhr bereit, so dass eine Mehrzahl von Ventileinheiten gemeinsam versorgt und betrieben werden kann.

In den Fig. 1-4 trägt die Ventilbasis 12 der Vorrichtung 10 eine Mehrzahl von Ventileinheiten 50, 52, 54, 56, die in/auf den Plätzen 20, 22, 24, 26 sitzen. Regelmäßig sind bei der Vorrichtung 10 zumindest zwei Ventileinheiten 50, 52, 54, 56 vorgesehen, die zumindest zwei der Plätze 20, 22, 24, 26 beanspruchen. Die Plätze 20, 22, 24, 26 können mit einer oder mehreren Ventileinheiten 50, 52, 54, 56 bestückt sein. Unbelegte Plätze 20, 22, 24, 26 werden als Leerplatz bezeichnet.

Im Ausführungsbeispiel gemäß Fig. 1 tragen die Ventileinheiten 50, 52, 54, 56 jeweils zumindest ein Ventil 60, 62, 64, 66. Im Ausführungsbeispiel sind die Ventile 60, 62, 64, 66 jeweils als 5/3-Wegeventil mit elektrischer Betätigung, Vorsteuerung über zwei Pilotventile für Ansteuerung und Rückstellung (also beide Richtungen der Bewegung eines Ventilschiebers oder Ventilglieds) sowie Handhilfsbetätigung für Ansteuerung und Rückstellung gestaltet. Es versteht sich, dass auch andere Arten von Ventilen verwendbar sind. Die modulare Gestaltung der Vorrichtung 10 erlaubt gerade die Nutzung unterschiedlicher Ventileinheiten 50, 52, 54, 56, so dass sich ein breites Einsatzgebiet ergibt.

Zumindest in beispielhaften Ausgestaltungen sind die Ventile 60, 62, 64, 66 als Wegeventile mit elektrischer Vorsteuerung gestaltet. Zumindest in beispielhaften Ausgestaltungen umfasst die elektrische Vorsteuerung zumindest ein Pilotventil. Zumindest in beispielhaften Ausgestaltungen umfasst die elektrische Vorsteuerung zumindest ein Piezo-Pilotventil. Zumindest in beispielhaften Ausgestaltung ist die Vorsteuerung für die Ansteuerung (Aktivierung) des Ventils vorgesehen. Zumindest in beispielhaften Ausgestaltungen ist sowohl für die Ansteuerung als auch für die Rückstellung eine elektrische Betätigung vorgesehen. Zumindest in beispielhaften Ausgestaltungen ist zusätzlich oder alternativ eine Handbetätigung oder Handhilfsbetätigung möglich. Wegeventile umfassen hinsichtlich der verfügbaren Anschlüsse/Positionen beispielsweise 2/2, 3/2, 4/2, 5/2 und 5/3-Wegeventile.

Die Figuren 2, 3 und 4 zeigen, dass die Ventilbasis 12 bei den Plätzen 20, 22, 24, 26 (vergleiche Fig. 1) Anschlüsse 70, 72, 74, 76, 80, 82, 84, 86 für die verbauten Ventileinheiten 50, 52, 54, 56 bereitstellt. Über die Anschlüsse 70, 72, 74, 76, 80, 82, 84, 86 kann bedarfsweise ein Fluidstrom bereitgestellt oder gestoppt werden. Zur Steuerung und Regelung dieses Vorgangs dienen die Ventileinheiten 50, 52, 54, 56.

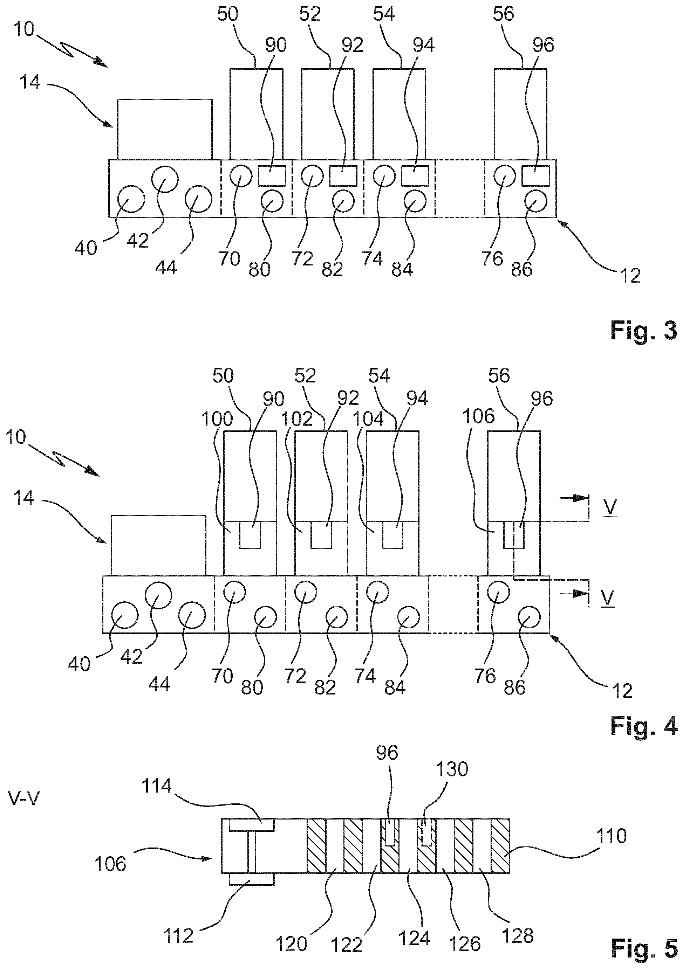

Auf Basis der schematischen Darstellung gemäß Fig. 1 veranschaulichen die Figuren 3-5 anhand weiterer schematischer Darstellungen verschiedene denkbare Konfigurationen der Vorrichtung 10. Die Figuren 2-4 veranschaulichten denkbare Varianten der Unterbringung multifunktionaler Sensoreinheiten 90, 92, 94, 96, die den Ventileinheiten 50, 52, 54, 56 funktional zugeordnet sind. Die Sensoreinheiten 90, 92, 94, 96 dienen beispielsweise zur Überwachung der Funktionalität und eines etwaigen Verschleißzustands der Ventileinheiten 50, 52, 54, 56.

Die Sensoreinheiten 90, 92, 94, 96 erlauben eine fein granulierte und engmaschige Überwachung der Ventileinheiten 50, 52, 54, 56. Die Überwachung erfolgt funktional direkt auf der Ebene der einzelnen Ventileinheiten 50, 52, 54, 56. In beispielhaften Ausgestaltungen basieren die Sensoreinheiten 90, 92, 94, 96 auf Sensoren, die ursprünglich als Sensoranordnung für Reifendruckkontrollsysteme gestaltet wurden.

Fig. 2 veranschaulicht eine Konfiguration der Vorrichtung 10, bei der die Sensoreinheiten 90, 92, 94, 96 baulich in die Ventileinheiten 50, 52, 54, 56 integriert sind. Eine solche Gestaltung erfordert entsprechende bauliche Maßnahmen bei den Ventileinheiten 50, 52, 54, 56.

Fig. 3 veranschaulicht eine Konfiguration der Vorrichtung 10, bei der die Sensoreinheiten 90, 92, 94, 96 baulich in die Ventilbasis 12 integriert sind. Der Sensoreinheiten 90, 92, 94, 96 sind jeweils einem der Plätze 20, 22, 24, 26 zugeordnet, um eine dort montierte Ventileinheit 50, 52, 54, 56 zu überwachen. Diese Gestaltung erfordert keine oder nur geringe bauliche Maßnahmen bei den Ventileinheiten 50, 52, 54, 56. Gleichwohl sind bauliche Maßnahmen bei der Ventilbasis 12 erforderlich.

Fig. 4 veranschaulicht eine Konfiguration der Vorrichtung 10, bei der die Sensoreinheiten 90, 92, 94, 96 baulich in sogenannte Zusatzplatten 100, 102, 104, 106 integriert sind. Die Zusatzplatten 100, 102, 104, 106 sind jeweils zwischen der Ventilbasis 12 und den Ventileinheiten 50, 52, 54, 56 angeordnet. Die Zusatzplatten 100, 102, 104, 106 können daher auch als Zwischenplatten oder Sandwichplatten bezeichnet werden.

Fig. 5 zeigt beispielhafte eine schematische Schnittansicht durch die Zusatzplatte 106, vergleiche hierzu die in Fig. 4 angedeutete Schnittlinie V-V. Im Ausführungsbeispiel gemäß Fig. 5 ist die Sensoreinheit 96 in ein Gehäuse 110 der Zusatzplatte 106 integriert. Die Zusatzplatte 106 trägt ferner Schnittstellen 112, 114, die auch hinsichtlich etwaiger Steuersignale und sonstiger Daten eine Verbindung zwischen der Ventilbasis 12 und den Ventileinheiten 50, 52, 54, 56 gewährleisten. Die Schnittstellen 112, 114 können ferner eine Energieversorgung zwischen der Ventilbasis 12 und den Ventileinheiten 50, 52, 54, 56 gewährleisten, beispielsweise betreffend elektrische Energie zur Erregung von Pilotventilen.

Die Zusatzplatten 100, 102, 104, 106 weisen jeweils Kanäle 120, 122, 124, 126, 128 auf, die an die Anschlüsse der Ventileinheiten 50, 52, 54, 56 angepasst sind. Es sind auch Zusatzplatten 100, 102, 104, 106 mit unterschiedlichen Konfigurationen hinsichtlich der Kanäle 120, 122, 124, 126, 128 vorstellbar. Auf diese Weise lassen sich verschiedene Varianten betreffend die fluidische Verbindung zwischen den Ventileinheiten 50, 52, 54, 56 und der Ventilbasis 12 verwirklichen.

Fig. 5 veranschaulicht ferner eine Ausführungsform, bei der zusätzlich zur Sensoreinheit 96 optional eine weitere Sensoreinheit 130 vorgesehen ist. Dies bietet sich etwa dann an, wenn verschiedene der Kanäle 120, 122, 124, 126, 128 möglichst separat überwacht werden sollen.

Es versteht sich, dass auch Ausgestaltungen der Vorrichtung 10 vorstellbar sind, bei denen Merkmale von zumindest zwei der in den Figuren 2-5 gezeigten Konfigurationen miteinander kombiniert sind. Insgesamt lassen sich auf dieser Weise mit der modularen Vorrichtung 10 verschiedenartige Ventilinseln mit integrierter Multisensorik zur Überwachung der einzelnen Ventileinheiten 50, 52, 54, 56 aufbauen.

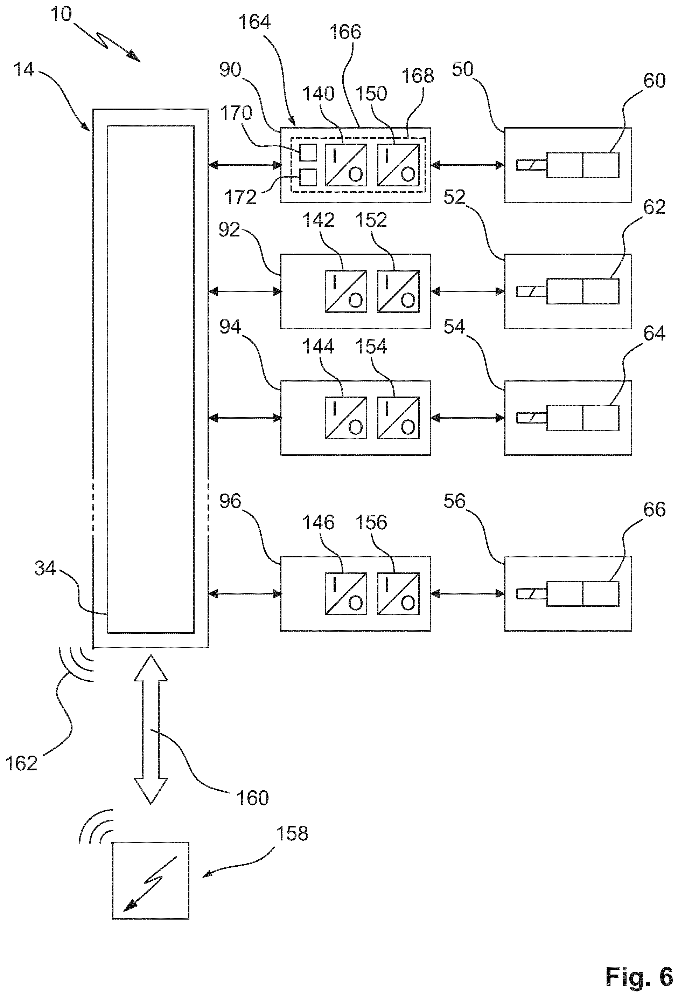

Fig. 6 veranschaulicht anhand eines vereinfachten Blockdiagramms weitere Funktionalitäten bei einer Vorrichtung 10 zur Steuerung und Regelung von Fluidströmen unter Nutzung der Ventile 60, 62, 64, 66 der Ventileinheiten 50, 52, 54, 56. Den Ventilen 60, 62, 64, 66 und der gemeinsamen Steuereinrichtung 14 der Vorrichtung 10 sind die Sensoreinheiten 90, 92, 94, 96 - zumindest betreffend die Datenerfassung - jeweils zwischengeordnet.

Im Ausführungsbeispiel gemäß Fig. 6 umfasst jede der Sensoreinheiten 90, 92, 94, 96 zwei Sensoren 140, 142, 144, 146, 150, 152, 154, 156. Es versteht sich, dass die Sensoreinheiten 90, 92, 94, 96 auch drei oder mehr Sensoren umfassen können. Daher können die Sensoreinheiten 90, 92, 94, 96 als multifunktionale Sensoreinheiten bezeichnet werden.

Die Sensoreinheiten 90, 92, 94, 96 umfassen mehrere Sensoren 140, 142, 144, 146, 150, 152, 154, 156 zur Erfassung mehrerer physikalischer Größen. Dies erfolgt üblicherweise unter Nutzung von Wandlern, die die zu erfassenden physikalischen Größen in elektrische Signale umwandeln. Ferner umfassen die Sensoren üblicherweise Elektronik zur Erfassung der elektrischen Signale sowie zur weiteren Wandlung, Speicherung, Verarbeitung und Übertragung.

Bei den mit den Sensoren 140, 142, 144, 146, 150, 152, 154, 156 der Sensoreinheiten 90, 92, 94, 96 erfassten physikalischen Größen handelt es sich beispielsweise um Druck, Differenzdruck, Durchfluss, Temperatur, Beschleunigung/Vibration (Resonanzfrequenzen), Akustikgrößen (Körper- und Luftschall), Ventilspannung und Ventilstrom, Ausrichtung des Sensors im Raum (z.B. Neigung und Richtung), Schaltspielzahl, Position/Stellung der Ventile, Ladezustand des Energiespeichers, Status der Informationsübertragung, Übertragungsqualität und dergleichen.

Die Sensoren 140, 142, 144, 146, 150, 152, 154, 156 der Sensoreinheiten 90, 92, 94, 96 ermitteln Signale zur Beschreibung und Quantifizierung physikalischer Größen und übermitteln entsprechende Sensordaten über die Schnittstelle 34 an die Steuereinrichtung 14 und bedarfsweise an eine übergeordnete Steuervorrichtung 158 zur weiteren Verarbeitung. Zur Übertragung kann eine serielle Kommunikation 160 genutzt werden, etwa unter Nutzung eines Bus-Systems. Bedarfsweise ist eine drahtlose Kommunikation 162 vorstellbar.

Die Sensordaten können drahtgebunden oder drahtlos zu einem oder mehreren Transceivern übertragen werden. Die Übertragung der Daten kann sowohl zwischen den Sensoren (Mesh Networking zur Erhöhung der Reichweite, Übertragungssicherheit und Abdeckung) als auch zu einer lokalen oder zentralen Steuerungseinheit erfolgen. Die Übertragung erfolgt beispielsweise durch elektromagnetische Wellen, wobei energieeffizient Übertragungswege nutzbar sind, vergleiche RFID, NFC, ISM-Band, LoRa oder LoRaWAN, Bluetooth low energy (BLE), Bluetooth Smart oder Bluetooth ultra low power. Die Übertragung kann grundsätzlich auch optisch erfolgen, beispielsweise unter Nutzung von Infrarot-Signalen oder sichtbarem Licht und Photoempfänger.

Fig. 6 veranschaulicht ferner anhand des Sensors 90, dass Sensoranordnungen 164 nutzbar sind, die mehrere der Sensoren 150, 160 baulich integrieren, beispielsweise mit einer gemeinsamen Kapselung oder einem gemeinsamen Gehäuse 166. Ferner können die Sensoren 150, 160 in einem gemeinsamen Schaltkreis 168 integriert oder mit diesem verbunden sein. Der Schaltkreis 168 kann auch weitere Komponenten umfassen, beispielsweise eine Energieversorgungseinheit 170 und/oder eine Kommunikationseinheit 172. In einer beispielhaften Ausgestaltung handelt es sich bei der Sensoranordnung 164 um eine als Reifendrucksensor für Reifendruckkontrollsysteme geeignete Anordnung. Die Verwendung solcher Sensoranordnungen 164 erlaubt bei geringem Zusatzaufwand eine deutliche Erweiterung des Funktionsumfangs der Vorrichtung 10.

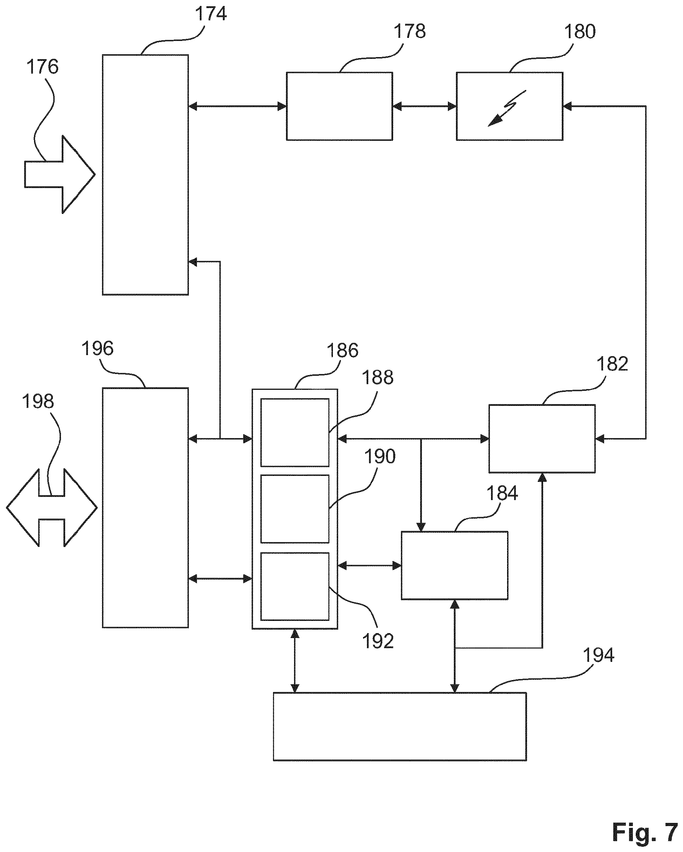

Fig. 7 veranschaulicht ergänzend anhand eines stark vereinfachten Blockdiagramms Signal- und Datenströme beim Betrieb einer erfindungsgemäßen Vorrichtung 10, insbesondere hinsichtlich der Verarbeitung der mit den Sensoreinheiten 90, 92, 94, 96 gewonnenen Daten. Ein mit 174 bezeichneter Block stellt eine Eingangsschnittstelle dar, der Sensordaten zugeführt werden vergleiche den Blockpfeil 176. Die Sensordaten durchlaufen einen Filter 178, der Ausreißer und ähnliche unerwünschte Bestandteile herausfiltert und grundsätzlich relevante Daten passieren lässt. Die Daten werden einer Verarbeitungseinheit 180 zugeführt. Die Verarbeitungseinheit 180 bestimmt auf Basis der bereitgestellten Daten einen Ist-Zustand, der in einem Ist-Zustandsspeicher 182 gespeichert wird.

Ist-Zustandsdaten werden einer maschinengestützte Auswertung 186 zugeführt, umfassend eine maschinengestützte Klassifikation 188 und/oder eine maschinengestützte Korrelation 190 von erfassten Daten. Die Korrelation 190 kann beispielsweise mit Bezug auf Signale erfolgen, die die Ventilerregung beschreiben. In einer beispielhaften Ausgestaltung umfasst die maschinengestützte Auswertung 186 eine Selbstlernprozedur 192 für die bei der Auswertung benutzten Algorithmen. Die maschinengestützte Auswertung 186 kann dazu genutzt werden, einen Referenz-Zustand zu definieren. Dieser wird in einem Referenz-Zustandsspeicher 182 hinterlegt. Sodann kann die maschinengestützte Auswertung 186 auch dazu genutzt werden, Abweichungen des Ist-Zustands vom Referenz-Zustand zu erfassen und auszuwerten. Auf diese Weise können Aussagen zum Verschleißverhalten und/oder zu etwaigen Defekten getroffen werden, idealerweise Vorhersagen, bevor kritische Verschleißzustände oder Defekte auftreten.

Die Auswertung kann um eine Schaltzykluserfassung 194 ergänzt werden, die auf Basis von Erregungssignalen und/oder durch die Sensoreinheiten bereitgestellten Signalen 90, 92, 94, 96 Schaltzyklen der einzelnen Ventileinheiten 50, 52, 54, 56 und/oder der gesamten Vorrichtung 10 erfasst. Auch diese Daten können bei der maschinengestützte Auswertung 186 und hierauf basierenden Schlussfolgerungen genutzt werden. Ein mit 196 bezeichneter Block stellt eine Schnittstelle dar, über die Ergebnisse der maschinengestützten Auswertung 186 bereitgestellt werden, vergleiche den Blockpfeil 198. Ferner ist auch eine Rückkopplung zur Eingangsschnittstelle 174 vorstellbar. Die Schnittstelle 196 kann auch zum Empfangen von Trainingsdaten für Algorithmen genutzt werden, die im Rahmen der maschinengestützten Auswertung 186 verwendet werden (vergleiche den als Doppelpfeil gestalteten Blockpfeil 198).

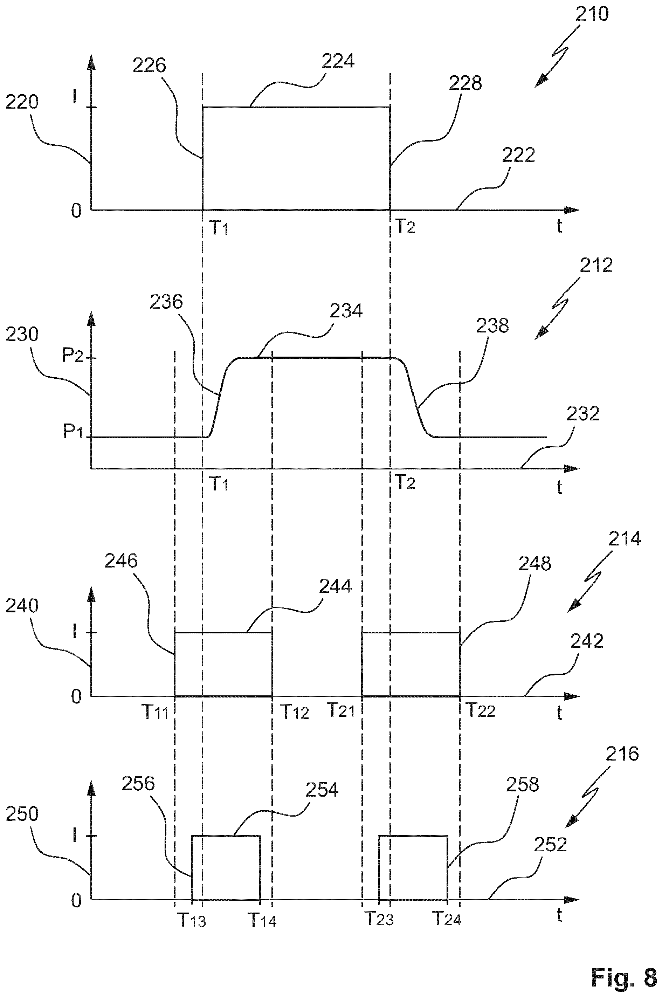

Fig. 8 veranschaulicht anhand mehrerer Diagramme 210, 212, 214, 216 Ansätze zur energieverbrauchsoptimierten Erfassung, Übermittlung und Auswertung der bereitgestellten Sensordaten.

Das Diagramm 210 veranschaulicht einen Schaltzustand bzw. Erregungszustand einer Ventileinheit. Dies betrifft beispielsweise die Bestromung eines Pilotventils. Das Diagramm 212 veranschaulicht eine resultierende Schieberposition eines Schiebers eines Wegeventils. Das Diagramm 214 veranschaulicht Datenübertragungsfenster für die Datenübertragung zwischen einer Sensoreinheit und einer Steuereinrichtung. Das Diagramm 216 veranschaulicht Korrelationsfenster für die Korrelation zwischen bereitgestellten Sensordaten und der Ventilerregung. Die Diagramme 210, 212, 214, 216 sind hinsichtlich ihrer Zeitachsen (Abszissen 222, 232, 242, 252) in Fig. 8 synchronisiert.

Das Diagramm 210 veranschaulicht beispielhaft ein binäres Signal 224, das zwei Zustände 0 und I annehmen kann, vergleiche die Ordinate 220. Das Signal 224 weist zwei steile/senkrechte Flanken 226, 228 auf. Die ansteigende Flanke 226 definiert einen Aktivierungszeitpunkt T1. Die abfallende Flanke 228 definiert einen Deaktivierungszeitpunkt T2.

Das Diagramm 212 veranschaulicht mit dem Signal 234 resultierende Positionsveränderungen bei einem Ventilschieber oder Ventilglied. Aufgrund der Trägheit folgt das Positionssignal 234 dem Erregungssignal 224 nur verzögert. Daher sind die ansteigende Flanke 236 und die abfallende Flanke 238 flacher als die steilen Flanken 226, 228 des Erregungssignals 224 und zeitlich dazu versetzt. Der Schieber wird durch die Erregung zwischen zwei Positionen P1 und P2 verfahren, um das Ventil zu schalten, vergleiche die Ordinate 230.

Das Diagramm 214 veranschaulicht beispielhaft ein binäres Signal 244, das zwei Zustände 0 und I annehmen kann, vergleiche die Ordinate 240. Mit 246 und 248 sind zwei Zeitfenster bezeichnet, in denen eine Datenübertragung von der Sensoreinheit ermöglicht ist. Das Übertragungsfenster 246 erstreckt sich zwischen den Zeitpunkten T₁₁ und T12. Das Übertragungsfenster 248 erstreckt sich zwischen den Zeitpunkten T21 und T22. Die Übertragungsfenster 246, 248 sind so gewählt, dass die ansteigende Flanken 226, 236 durch das Übertragungsfenster 246 und die abfallenden Flanken 228, 238 durch das Übertragungsfenster 248 abgedeckt sind. Auf diese Weise wird sichergestellt, dass relevante Daten übertragen werden. In Zeitabschnitten, in denen nicht mit relevanten Daten gerechnet wird, braucht keine Datenübertragung und ggfs. keine Datenerfassung stattfinden. Auf diese Weise wird der Energiebedarf reduziert.

Das Diagramm 216 veranschaulicht beispielhaft ein binäres Signal 254, das zwei Zustände 0 und I annehmen kann, vergleiche die Ordinate 250. Mit 256 und 258 sind zwei Zeitfenster bezeichnet, in denen eine Korrelation der von der Sensoreinheit bereitgestellten Daten durchgeführt wird. Das Korrelationsfenster 256 erstreckt sich zwischen den Zeitpunkten T13 und T14. Das Korrelationsfenster 258 erstreckt sich zwischen den Zeitpunkten T23 und T24. Die Korrelationsfenster 256, 258 sind so gewählt, dass die ansteigende Flanken 226, 236 durch das Korrelationsfenster 256 und die abfallenden Flanken 228, 238 durch das Korrelationsfenster 258 abgedeckt sind. Ferner ist das Korrelationsfenster 256 so gewählt, dass es vollständig vom Übertragungsfenster 246 überlappt wird, und kürzer als dieses ist. Das Korrelationsfenster 258 ist so gewählt, dass es vollständig vom Übertragungsfenster 256 überlappt wird, und kürzer als dieses ist. Auf diese Weise wird sichergestellt, dass auch tatsächlich erfasste und übertragene Daten in die Korrelation einfließen.

Es versteht sich, dass sich die Signale 210, 212, 214 und 216 mit jedem neuen Schaltzyklus der Ventileinheit wiederholen können. Die kann periodisch, alternierend oder aperiodisch erfolgen.

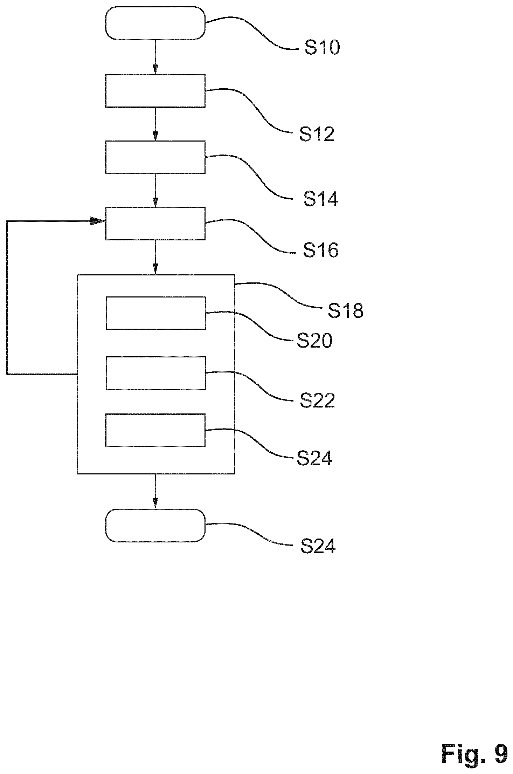

Mit Bezugnahme auf Fig. 9 wird anhand eines schematischen Blockdiagramms eine Ausgestaltung eines Verfahrens zur Steuerung und Regelung von Fluidströmen veranschaulicht. Die gezeigten Schritte starten bei einem Schritt S10 und enden im Ausführungsbeispiel bei einem Schritt S24. Es versteht sich, dass es sich bei der Darstellung gemäß Fig. 9 nur um einen Auszug aus einer umfangreicheren Prozedur handeln kann. Ergänzungen sind vorstellbar.

Auf den Schritt S10 folgt ein Schritt S12, der auf die Bereitstellung einer erfindungsgemäßen Vorrichtung gerichtet ist. Die Vorrichtung ist beispielhaft als modulare Ventilinsel verwendbar. Es folgt ein Schritt S14, der die Bestückung einer Ventilbasis oder Grundplatte der Vorrichtung mit einer Mehrzahl von Ventileinheiten umfasst. Die Ventileinheiten werden in Ventilplätze auf der Grundplatte der Vorrichtung gesetzt. Auf der Ebene der Ventileinheiten sind multifunktionale Steuereinrichtungen vorgesehen, die jeweils zumindest zwei Sensoren zur Erfassung von zwei oder mehr physikalischen Größen aufweisen.

Es schließt sich im Schritt S16 ein operativer Betrieb der Vorrichtung zur Steuerung und Regelung von Fluidsystem an. Dies kann im Rahmen eines komplexen Systems erfolgen, beispielsweise auf dem Gebiet der Automatisierungstechnik. Der Schritt S16 umfasst beispielhaft eine Erregung von Pilotventilen zur Vorsteuerung eines Wegeventils einer Ventileinheit der Vorrichtung.

Ein Schritt S18 bezieht sich auf eine Überwachung der Ventileinheiten mit den Steuereinheiten während des Betriebs der Ventilvorrichtung. Der Schritt S18 umfasst im Ausführungsbeispiel Teilschritte S20, S22 und S24. Der Teilschritt S20 bezieht sich auf eine Signalerfassung durch die Sensoren der Sensoreinheiten. Der Teilschritt S22 bezieht sich auf eine Auswertung der erfassten Sensordaten. Dies umfasst beispielsweise eine Korrelation mit Daten betreffend die Ventilerregung. Der Schritt S24 umfasst die Herleitung von Informationen auf Basis der erfassten ausgewerteten Sensordaten.

Der Schritt S24 umfasst beispielsweise die Nutzung eines künstlichen neuronalen Netzes zur Klassifikation und/oder Korrelation von Daten. Auf diese Weise können Ventilzustände erfasst werden. Ferner lassen sich Informationen über den Verschleißzustand der Ventileinheiten ermitteln. Die Informationen sind zu Zwecken der prädiktiven Wartung aber auch zur Optimierung der Regelung der Ventileinheit nutzbar. Daher können im Rahmen der Überwachung S18 gewonnene Informationen auch im Sinne einer Rückkopplung beim operativen Betrieb der Vorrichtung (Schritt S16) genutzt werden.

## Patentansprüche

1. Vorrichtung (10) zur Steuerung und Regelung von Fluidströmen, die Folgendes aufweist:
- zumindest zwei elektrisch betätigte Ventileinheiten (50, 52, 54, 56),
- eine Ventilbasis (12), die die zumindest zwei Ventileinheiten (50, 52, 54, 56) trägt,
- eine Steuereinrichtung (14) zur Steuerung und Überwachung der zumindest zwei Ventileinheiten (50, 52, 54, 56),
- eine erste multifunktionale Sensoreinheit (90, 92, 94, 96, 130), die einer ersten der zumindest zwei elektrisch betätigten Ventileinheiten (50, 52, 54, 56) zugeordnet ist, und
- eine zweite multifunktionale Sensoreinheit (90, 92, 94, 96, 130), die einer zweiten der zumindest zwei elektrisch betätigten Ventileinheiten (50, 52, 54, 56) zugeordnet ist,
wobei die erste Sensoreinheit (90, 92, 94, 96, 130) und die zweite Sensoreinheit (90, 92, 94, 96, 130) jeweils einen Körperschallsensor (140, 142, 144, 146) zur Erfassung eines Körperschallsignals aufweisen, und
wobei die erste Sensoreinheit (90, 92, 94, 96, 130) und die zweite Sensoreinheit (90, 92, 94, 96, 130) jeweils zumindest einen weiteren Sensor (150, 152, 154, 156) zur Erfassung einer weiteren Messgröße aufweisen,
wobei die Steuereinrichtung (14) dazu ausgebildet ist, durch die Sensoreinheiten (90, 92, 94, 96, 130) bereitgestellte Signale auf Basis einer Korrelation mit einer elektrischen Ventilerregung auszuwerten,
**dadurch gekennzeichnet, dass** die Steuereinrichtung (14) dazu ausgebildet ist, die Auswertung auf Basis der Signale begrenzter Zeitfenster (256, 258) durchzuführen, umfassend ein erstes Zeitfenster (256), das eine erste Flanke (226) eines Erregungssignals (224) abdeckt, und ein zweites Zeitfenster (258), das eine zweite Flanke (228) des Erregungssignals (224) abdeckt, die gegenläufig zur ersten Flanke (226) ist.

2. Vorrichtung (10) nach Anspruch 1, wobei der zumindest eine weitere Sensor (150, 152, 154, 156) der ersten Sensoreinheit (90, 92, 94, 96, 130) und der zweiten Sensoreinheit (90, 92, 94, 96, 130) ein Drucksensor ist, und/oder wobei der zumindest eine weitere Sensor (150, 152, 154, 156) der ersten und zweiten Sensoreinheit (90, 92, 94, 96, 130) ein Temperatursensor ist.

3. Vorrichtung (10) nach Anspruch 1 oder 2, wobei die zumindest zwei Ventileinheiten (50, 52, 54, 56) jeweils vorgesteuerte Ventile (50, 52, 54, 56) umfassen, insbesondere Wegeventile (50, 52, 54, 56) mit Piezo-Vorsteuerung.

4. Vorrichtung (10) nach einem der Ansprüche 1-3, wobei zumindest die erste Sensoreinheit (90, 92, 94, 96, 130) oder die zweite Sensoreinheit (90, 92, 94, 96, 130) dazu ausgebildet oder betreibbar sind, Signale nur in einem ersten Übertragungs-Zeitfenster (246) und in einem zweiten Übertragungs-Zeitfenster (248) zu übermitteln.

5. Vorrichtung (10) nach einem der Ansprüche 1-4, wobei die Steuereinrichtung (14) dazu ausgebildet ist, zu Auswertungszwecken auf Basis der Sensorsignale zumindest eine Größe zu ermitteln, die aus der Gruppe ausgewählt ist, die aus Folgendem besteht: Frequenzspektrum, Amplitude, Phase, Zeitverzögerung und Kombinationen daraus.

6. Vorrichtung (10) nach einem der Ansprüche 1-5, wobei die Steuereinrichtung (14) dazu ausgebildet ist, auf Basis der durch die Sensoreinheiten (90, 92, 94, 96, 130) bereitgestellten Signale zumindest einen Parameter zu ermitteln, der zu Diagnosezwecken nutzbar ist, insbesondere zu Zwecken der Ausfall-Frühdiagnose und/oder zu Zwecken der prädiktiven Instandhaltung.

7. Vorrichtung (10) nach einem der Ansprüche 1-6, wobei die Steuereinrichtung (14) dazu ausgebildet ist, eine maschinengestützte Selbstlernprozedur durchzuführen, um einen Referenzzustand zu ermitteln, und wobei die Selbstlernprozedur insbesondere ein unüberwachtes maschinellen Lernen auf Basis neuronaler Netze umfasst.

8. Vorrichtung (10) nach einem der Ansprüche 1-7, wobei zumindest die erste Sensoreinheit (90, 92, 94, 96, 130) oder die zweite Sensoreinheit (90, 92, 94, 96, 130) als baulich integrierte Sensoreinheit (90, 92, 94, 96, 130) gestaltet ist.

9. Vorrichtung (10) nach einem der Ansprüche 1-8, wobei die Vorrichtung (10) als modulare Ventilinsel gestaltet ist, wobei die Ventilbasis (12) eine Mehrzahl von Ventilplätzen (20, 22, 24, 26) aufweist, die zur Aufnahme einer Ventileinheit (50, 52, 54, 56) ausgebildet sind, und wobei zumindest zwei der Ventilplätze (20, 22, 24, 26) Ventileinheiten (50, 52, 54, 56) tragen, denen gleichartige Sensoreinheiten (90, 92, 94, 96, 130) zugeordnet sind.

10. Vorrichtung (10) nach einem der Ansprüche 1-9, wobei zumindest die erste Ventileinheit (50, 52, 54, 56) oder die zweite Ventileinheit (50, 52, 54, 56) mit einer Zusatzplatte (100, 102, 104, 106) gekoppelt sind, die die zugeordnete erste Sensoreinheit (90, 92, 94, 96, 130) oder zweite Sensoreinheit (90, 92, 94, 96, 130) trägt.

11. Vorrichtung (10) nach Anspruch 10, wobei die Zusatzplatte (100, 102, 104, 106) zwischen der Ventilbasis (12) und der Ventileinheit (50, 52, 54, 56) angeordnet ist und eine fluidische Verbindung zwischen der Ventilbasis (12) und der Ventileinheit (50, 52, 54, 56) bereitstellt.

12. Vorrichtung (10) nach einem der Ansprüche 1-11, wobei zumindest die erste Sensoreinheit (90, 92, 94, 96, 130) oder die zweite Sensoreinheit (90, 92, 94, 96, 130) auf Basis einer Sensoranordnung (164) für Reifendruckkontrollsysteme gebildet ist, und wobei die Sensoranordnung (164) einen integrierten Schaltkreis (168) aufweist, der mehrere Sensortypen umfasst.

13. Verwendung einer Vorrichtung (10) nach einem der Ansprüche 1-12 für Reifendruckkontrollsysteme.

14. Verfahren zum Betreiben einer Vorrichtung (10) zur Steuerung und Regelung von Fluidströmen nach einem der Ansprüche 1-12, mit den folgenden Schritten:
- Betreiben der Steuereinrichtung (14) zur Überwachung von durch die Sensoreinheiten (90, 92, 94, 96, 130) bereitgestellten Signalen auf Basis einer Korrelation erfasster Messgrößen mit einer elektrischen Ventilerregung, insbesondere einer Ventilerregung von Pilotventilen der Ventileinheiten (50, 52, 54, 56), umfassend:
- Bereitstellung von Signalen durch zumindest die erste Sensoreinheit (90, 92, 94, 96, 130) oder die zweite Sensoreinheit (90, 92, 94, 96, 130) nur in begrenzten Zeitfenstern (246, 248), umfassend ein erstes Übertragungs-Zeitfenster (246), das eine erste Flanke (226) eines Erregungssignals abdeckt, und ein zweites Übertragungs-Zeitfenster (248), das eine zweite Flanke (228) des Erregungssignals abdeckt, die gegenläufig zur ersten Flanke (226) ist, und
- Auswertung der bereitgestellten Signale, die in den begrenzten Zeitfenstern (246, 248) durch zumindest die erste Sensoreinheit (90, 92, 94, 96, 130) oder die zweite Sensoreinheit (90, 92, 94, 96, 130) bereitgestellt werden.

## Claims

1. A device (10) for controlling and regulating fluid flows, comprising:
- at least two electrically actuated valve units (50, 52, 54, 56),
- a valve base (12) which supports the at least two valve units (50, 52, 54, 56),
- a control device (14) for controlling and monitoring the at least two valve units (50, 52, 54, 56),
- a first multifunctional sensor unit (90, 92, 94, 96, 130) associated with a first of the at least two electrically actuated valve units (50, 52, 54, 56), and
- a second multifunctional sensor unit (90, 92, 94, 96, 130) associated with a second of the at least two electrically actuated valve units (50, 52, 54, 56),
wherein the first sensor unit (90, 92, 94, 96, 130) and the second sensor unit (90, 92, 94, 96, 130) each comprise a structure-borne sound sensor (140, 142, 144, 146) for detecting a structure-borne sound signal, and
wherein the first sensor unit (90, 92, 94, 96, 130) and the second sensor unit (90, 92, 94, 96, 130) each have at least one further sensor (150, 152, 154, 156) for detecting a further measured variable,
wherein the control device (14) is configured to evaluate signals provided by the sensor units (90, 92, 94, 96, 130) on the basis of a correlation with an electrical valve excitation,
**characterized in that** the control device (14) is configured to perform the evaluation on the basis of the signals within limited time windows (256, 258), comprising a first time window (256), which covers a first edge (226) of an excitation signal (224), and a second time window (258), which covers a second edge (228) of the excitation signal (224), which is opposite to the first edge (226).

2. The device (10) according to claim 1, wherein the at least one further sensor (150, 152, 154, 156) of the first sensor unit (90, 92, 94, 96, 130) and the second sensor unit (90, 92, 94, 96, 130) is a pressure sensor, and/or wherein the at least one further sensor (150, 152, 154, 156) of the first and second sensor unit (90, 92, 94, 96, 130) is a temperature sensor.

3. The device (10) according to claim 1 or 2, wherein the at least two valve units (50, 52, 54, 56) each comprise pilot-controlled valves (50, 52, 54, 56), in particular directional control valves (50, 52, 54, 56) with piezo pilot control.

4. The device (10) according to any one of claims 1-3, wherein at least the first sensor unit (90, 92, 94, 96, 130) or the second sensor unit (90, 92, 94, 96, 130) are configured or operable to transmit signals only in a first transmission time window (246) and in a second transmission time window (248).

5. The device (10) according to any one of claims 1-4, wherein the control device (14) is adapted to determine, for evaluation purposes, based on the sensor signals, at least one quantity selected from the group consisting of the following: Frequency spectrum, amplitude, phase, time delay and combinations thereof.

6. The device (10) according to any one of claims 1-5, wherein the control device (14) is configured to determine, on the basis of the signals provided by the sensor units (90, 92, 94, 96, 130), at least one parameter that can be used for diagnostic purposes, in particular for the purposes of early failure diagnosis and/or for the purposes of predictive maintenance.

7. The device (10) according to any one of claims 1-6, wherein the control device (14) is adapted to perform a machine-based self-learning procedure to determine a reference state, and wherein the self-learning procedure comprises in particular an unsupervised machine learning based on neural networks.

8. The device (10) according to any one of claims 1-7, wherein at least the first sensor unit (90, 92, 94, 96, 130) or the second sensor unit (90, 92, 94, 96, 130) is configured as a structurally integrated sensor unit (90, 92, 94, 96, 130).

9. The device (10) according to any one of claims 1-8, wherein the device (10) is configured as a modular valve island, wherein the valve base (12) has a plurality of valve locations (20, 22, 24, 26) that are configured to accommodate a valve unit (50, 52, 54, 56), and wherein at least two of the valve locations (20, 22, 24, 26) support valve units (50, 52, 54, 56) to which similar sensor units (90, 92, 94, 96, 130) are assigned.

10. The device (10) according to any one of claims 1-9, wherein at least the first valve unit (50, 52, 54, 56) or the second valve unit (50, 52, 54, 56) are coupled to a supplementary plate (100, 102, 104, 106) carrying the associated first sensor unit (90, 92, 94, 96, 130) or second sensor unit (90, 92, 94, 96, 130).

11. The device (10) according to claim 10, wherein the supplementary plate (100, 102, 104, 106) is arranged between the valve base (12) and the valve unit (50, 52, 54, 56) and provides a fluidic connection between the valve base (12) and the valve unit (50, 52, 54, 56).

12. The device (10) according to any one of claims 1-11, wherein at least the first sensor unit (90, 92, 94, 96, 130) or the second sensor unit (90, 92, 94, 96, 130) is formed on the basis of a sensor arrangement (164) for tire pressure monitoring systems, and wherein the sensor arrangement (164) comprises an integrated circuit (168) comprising a plurality of sensor types.

13. A use of a device (10) according to any one of claims 1-12 for tire pressure monitoring systems.

14. A method of operating a device (10) for controlling and regulating fluid flows according to any one of claims 1-12, comprising the following steps:
- operating the control device (14) for monitoring signals provided by the sensor units (90, 92, 94, 96, 130) on the basis of a correlation of detected measured variables with an electrical valve excitation, in particular a valve excitation of pilot valves of the valve units (50, 52, 54, 56), comprising:
- providing signals by at least the first sensor unit (90, 92, 94, 96, 130) or the second sensor unit (90, 92, 94, 96, 130) only in limited time windows (246, 248), comprising a first transmission time window (246) covering a first edge (226) of an excitation signal, and a second transmission time window (248) covering a second edge (228) of the excitation signal which is opposite to the first edge (226), and
- evaluating the signals that are provided in the limited time windows (246, 248) by at least the first sensor unit (90, 92, 94, 96, 130) or the second sensor unit (90, 92, 94, 96, 130).

## Revendications

1. Dispositif (10) pour la commande et la régulation de flux de fluide, lequel dispositif présente ce qui suit :
- au moins deux unités à soupapes (50, 52, 54, 56) à actionnement électrique,
- une base pour soupapes (12) qui porte les au moins deux unités à soupapes (50, 52, 54, 56),
- un appareil de commande (14) pour la commande et la surveillance des au moins deux unités à soupapes (50, 52, 54, 56),
- une première unité à capteurs (90, 92, 94, 96, 130) multifonctionnelle qui est associée à une première des au moins deux unités à soupapes (50, 52, 54, 56) à actionnement électrique, et
- une seconde unité à capteurs (90, 92, 94, 96, 130) multifonctionnelle qui est associée à une seconde des au moins deux unités à soupapes (50, 52, 54, 56) à actionnement électrique,
dans lequel la première unité à capteurs (90, 92, 94, 96, 130) et la seconde unité à capteurs (90, 92, 94, 96, 130) présentent respectivement un capteur de bruit de structure (140, 142, 144, 146) pour la détection d'un signal de bruit de structure, et
dans lequel la première unité à capteurs (90, 92, 94, 96, 130) et la seconde unité à capteurs (90, 92, 94, 96, 130) présentent respectivement au moins un capteur supplémentaire (150, 152, 154, 156) pour la détection d'une grandeur de mesure supplémentaire,
dans lequel l'appareil de commande (14) est configuré pour évaluer des signaux fournis par les unités à capteurs (90, 92, 94, 96, 130) sur la base d'une corrélation avec une excitation électrique de soupape,
**caractérisé en ce que** l'appareil de commande (14) est configuré pour exécuter l'évaluation sur la base des signaux de fenêtres temporelles (256, 258) limitées comprenant une première fenêtre temporelle (256) recouvrant un premier flanc (226) d'un signal d'excitation (224) et une seconde fenêtre temporelle (258) recouvrant un second flanc (228) du signal d'excitation (224), lequel second flanc est opposé au premier flanc (226).

2. Dispositif (10) selon la revendication 1, dans lequel l'au moins un capteur supplémentaire (150, 152, 154, 156) de la première unité à capteurs (90, 92, 94, 96, 130) et de la seconde unité à capteurs (90, 92, 94, 96, 130) est un capteur de pression, et/ou dans lequel l'au moins un capteur supplémentaire (150, 152, 154, 156) de la première et de la seconde unité à capteurs (90, 92, 94, 96, 130) est un capteur de température.

3. Dispositif (10) selon la revendication 1 ou 2, dans lequel les au moins deux unités à soupapes (50, 52, 54, 56) comprennent respectivement des soupapes (50, 52, 54, 56) pilotées, en particulier des soupapes directionnelles (50, 52, 54, 56) à pilotage piézoélectrique.

4. Dispositif (10) selon l'une des revendications 1 à 3, dans lequel au moins la première unité à capteurs (90, 92, 94, 96, 130) ou la seconde unité à capteurs (90, 92, 94, 96, 130) est configurée ou peut fonctionner pour transmettre des signaux uniquement dans une première fenêtre temporelle de diffusion (246) et dans une seconde fenêtre temporelle de diffusion (248).

5. Dispositif (10) selon l'une des revendications 1 à 4, dans lequel l'appareil de commande (14) est configuré pour déterminer, à des fins d'évaluation, sur la base des signaux de capteur, au moins une grandeur qui est choisie dans le groupe constitué de ce qui suit : spectre de fréquence, amplitude, phase, retard temporel et combinaisons de ceux-ci.

6. Dispositif (10) selon l'une des revendications 1 à 5, dans lequel l'appareil de commande (14) est configuré pour déterminer, sur la base des signaux fournis par les unités à capteurs (90, 92, 94, 96, 130), au moins un paramètre qui est utilisable à des fins de diagnostic, en particulier à des fins de diagnostic précoce de défaillance et/ou à des fins de maintenance prédictive.

7. Dispositif (10) selon l'une des revendications 1 à 6, dans lequel l'appareil de commande (14) est configuré pour exécuter une procédure d'apprentissage autonome assistée par machine afin de déterminer un état de référence, et dans lequel la procédure d'apprentissage autonome comprend en particulier un apprentissage automatique non supervisé basé sur des réseaux neuronaux.

8. Dispositif (10) selon l'une des revendications 1 à 7, dans lequel au moins la première unité à capteurs (90, 92, 94, 96, 130) ou la seconde unité à capteurs (90, 92, 94, 96, 130) est réalisée sous forme d'unité à capteurs (90, 92, 94, 96, 130) intégrée structurellement.

9. Dispositif (10) selon l'une des revendications 1 à 8, dans lequel le dispositif (10) est réalisé sous forme d'îlot pour soupapes modulaire, dans lequel la base pour soupapes (12) présente une pluralité d'emplacements pour soupapes (20, 22, 24, 26) qui sont conçus pour recevoir une unité à soupapes (50, 52, 54, 56), et dans lequel au moins deux des emplacements pour soupapes (20, 22, 24, 26) portent des unités à soupapes (50, 52, 54, 56) auxquelles sont associées des unités à capteurs (90, 92, 94, 96, 130) de même type.

10. Dispositif (10) selon l'une des revendications 1 à 9, dans lequel au moins la première unité à soupapes (50, 52, 54, 56) ou la seconde unité à soupapes (50, 52, 54, 56) est accouplée à une plaque auxiliaire (100, 102, 104, 106) qui porte la première unité à capteurs (90, 92, 94, 96, 130) ou la seconde unité à capteurs (90, 92, 94, 96, 130) associée.

11. Dispositif (10) selon la revendication 10, dans lequel la plaque auxiliaire (100, 102, 104, 106) est disposée entre la base pour soupapes (12) et l'unité à soupapes (50, 52, 54, 56) et fournit une communication fluidique entre la base pour soupapes (12) et l'unité à soupapes (50, 52, 54, 56).

12. Dispositif (10) selon l'une des revendications 1 à 11, dans lequel au moins la première unité à capteurs (90, 92, 94, 96, 130) ou la seconde unité à capteurs (90, 92, 94, 96, 130) est formée sur la base d'un agencement à capteurs (164) pour des systèmes de contrôle de pression de pneus, et dans lequel l'agencement à capteurs (164) présente un circuit intégré (168) qui comprend plusieurs types de capteurs.

13. Utilisation d'un dispositif (10) selon l'une des revendications 1 à 12 pour des systèmes de contrôle de pression de pneus.

14. Procédé permettant de faire fonctionner un dispositif (10) pour la commande et la régulation de flux de fluide selon l'une des revendications 1 à 12, comportant les étapes suivantes :
- fonctionnement de l'appareil de commande (14) pour la surveillance de signaux fournis par les unités à capteurs (90, 92, 94, 96, 130) sur la base d'une corrélation de grandeurs de mesure détectées avec une excitation électrique de soupape, en particulier une excitation de soupape de soupapes pilotes des unités à soupapes (50, 52, 54, 56), comprenant :
- la fourniture de signaux par au moins la première unité à capteurs (90, 92, 94, 96, 130) ou la seconde unité à capteurs (90, 92, 94, 96, 130) uniquement dans des fenêtres temporelles (246, 248) limitées comprenant une première fenêtre temporelle de diffusion (246) recouvrant un premier flanc (226) d'un signal d'excitation et une seconde fenêtre temporelle de diffusion (248) recouvrant un second flanc (228) du signal d'excitation, lequel second flanc est opposé au premier flanc (226), et
- l'évaluation des signaux fournis, lesquels sont fournis dans les fenêtres temporelles (246, 248) limitées par au moins la première unité à capteurs (90, 92, 94, 96, 130) ou la seconde unité à capteurs (90, 92, 94, 96, 130).
